# EUROPEAN PATENT APPLICATION

(11) **EP 2 933 962 A1**
(43) Date of publication of application: **21.10.2015**
(21) Application number: 13871687.3
(22) Date of filing: 16.01.2013
(51) Int. Cl.: H04L 12/70

(54) **METHOD FOR IMPLEMENTING TRILL OAM PACKET, RB, AND TRILL NETWORK**

(71) Applicant: Huawei Technologies Co., Ltd., Longgang District Shenzhen, Guangdong 518129 (CN)
(72) Inventor: ZONG, Zhigang, Shenzhen Guangdong 518129 (CN); XIE, Ying, Shenzhen Guangdong 518129 (CN); WU, Guangrui, Shenzhen Guangdong 518129 (CN)
(74) Representative: Pfenning, Meinig & Partner GbR
(86) International application number: PCT/CN2013/070531
(87) International publication number: WO 2014/110729

(57) **Abstract**

Embodiments of the present invention disclose a method, an RB and a TRILL network for implementing OAM. A DVLAN of a TRILL is designated to be used for TRILL OAM, so that an inner VLAN ID and an outer VLAN ID of a TRILL OAM packet are both a DVLAN ID, thereby ensuring availability of a TRILL OAM function.

## Description

### TECHNICAL FIELD

Embodiments of the present invention relate to the field of network communications, and in particular, to a method, an RB, and a TRILL network for implementing a TRILL OAM packet.

### BACKGROUND

Transparent Interconnection of Lots of Links (transparent interconnection of lots of links, TRILL for short) is a protocol that is applied to a routing bridge (router bridge or RBridge, RB for short) device. The TRILL runs on a data link layer (data link layer), that is, layer 2 (layer 2, L2 for short) in an Open System Interconnection (open system interconnection, OSI for short) reference model; uses a link state routing technology based on Intermediate System to Intermediate System (Intermediate system to intermediate system, IS-IS) to spread and advertise a topology and a member relationship of a logical network; applies the link state routing technology to the data link layer; and provides logical Ethernet on a traditional Ethernet architecture.

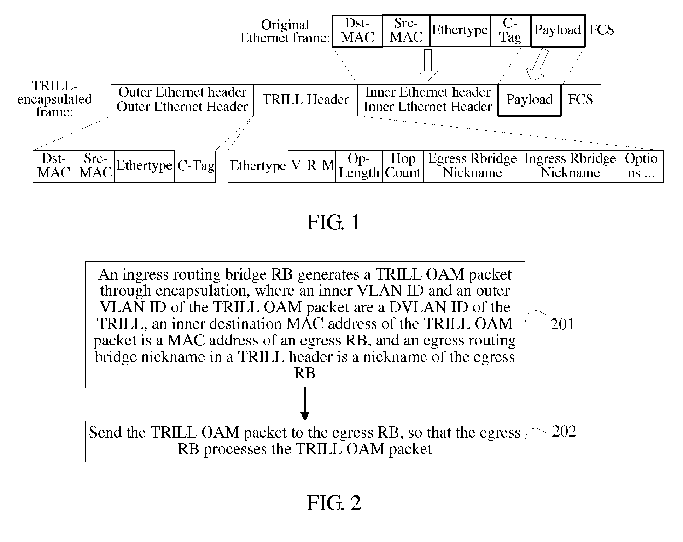

FIG. 1 shows an encapsulation format of a TRILL packet, the TRILL packet includes an outer Ethernet header (Outer Ethernet Header), a TRILL header, an inner Ethernet header (Inner Ethernet Header), a Payload (Payload), and a frame check sequence (frame check sequence, FCS for short), where the Payload of the TRILL packet is generally the Payload of an original Ethernet frame, and the inner Ethernet header is generally the header of the original Ethernet frame. A meaning of each field in the TRILL header is as follows:
Ethertype: Ethertype, 16 bits (bit); and generally, the Ethertype of a TRILL data frame is TRILL and the Ethertype of a TRILL IS-IS frame is L2-IS-IS;
V (Version): TRILL version number, 2 bits (bit);
R (Reserved): reserved field, 2 bits (bit);
M (Multi-destination): multicast identifier, 1 bit (bit); and 0 indicates known unicast, and 1 indicates unknown unicast/multicast/broadcast;
Op-Length (Options Length): length of an Option (Options) field, 5 bits (bit); and a length of the Options field is defined by Op-Length and measured in unit of four bytes, for example, if a value of Op-Length is 1, it indicates that a length of Options is four bytes, that is, 32 bits (bit);
Hop Count: hop count, 6 bits (bit); and a value of Hop Count decreases by 1 hop by hop; when the value of Hop Count is 0, a packet is discarded so as to prevent a loop storm;
Egress RBridge Nickname: egress routing bridge nickname, 16 bits (bit); generally, it identifies a target edge RB when a packet leaves a TRILL; and an intermediate transmission RB node cannot change a value of this field;
Ingress RBridge Nickname: ingress routing bridge nickname, 16 bits (bit); generally, it identifies an initial edge RB when a packet enters a TRILL; and an intermediate transmission RB node cannot change a value of this field; and
Options: options; and the length of an option is determined by Op-Length.

Formats of the outer Ethernet header and the inner Ethernet header of the TRILL packet are generally the same. A meaning of each field is as follows:
Dst-MAC: destination media access control (media access control, MAC for short) address, 64 bits (bit);
Src-MAC: source MAC address, 64 bits (bit);
Ethertype: Ethernet type, 16 bits (bit); and
VLAN Tag: virtual local area network (virtual local area network, VLAN for short) label information, 16 bits (bit), including a 14-bit (bit) VLAN identifier (identifier, ID for short).

When a TRILL packet is forwarded between RBs, other fields in a TRILL header remain unchanged except that Hop Count decreases by 1 hop by hop. Contents of an inner Ethernet header and a Payload remain unchanged, and a source MAC address and a destination MAC address of an outer Ethernet header are updated hop by hop.

Generally, each RB on the TRILL may maintain a list of VLANs concerned by itself. When an RB receives a TRILL packet sent to the RB, that is, an egress routing bridge nickname in a TRILL header is a nickname of the RB, the RB decapsulates the TRILL packet and checks whether a VLAN ID in an inner Ethernet header is in a VLAN list of the RB. If the VLAN ID is not in the VLAN list of the RB, the TRILL packet is discarded; and if the VLAN ID is in the VLAN list of the RB, the decapsulated TRILL packet continues to be processed by the RB.

An operation, administration and maintenance (operations, administration and maintenance, OAM for short) packet, for example, a packet such as ping or bidirectional forwarding detection (bidirectional forwarding detection, BFD for short), is a packet used to maintain a link state on a network. On a TRILL, a link state between RBs can be maintained through a TRILL OAM packet, that is, an OAM packet obtained after TRILL encapsulation. Generally, the OAM packet does not carry a VLAN ID. Therefore, a VLAN needs to be selected and a VLAN ID of the VLAN is used as a VLAN ID in an inner Ethernet header of the TRILL OAM packet, so that the TRILL OAM packet generated through encapsulation can be processed by a target RB only when the TRILL OAM packet arrives at the target RB.

In a first prior art, a VLAN 0 or a VLAN 1 is selected to be used for TRILL OAM, that is, a VLAN ID that is 0 or 1 is selected and used as the VLAN ID in the inner Ethernet header of the TRILL OAM packet. However, a packet that carries a VLAN ID that is 0 is generally regarded as a packet of an invalid type and discarded in a processing process. If the VLAN 0 is used for TRILL OAM, supporting of the TRILL OAM on all RBs cannot be ensured, and therefore availability of a TRILL OAM function cannot be ensured. A VLAN 1 is generally a VLAN that is configured on an RB by default, and all ports are added to the VLAN 1. If the VLAN 1 is used, when performing OAM processing, the RB learns, from the VLAN 1, a MAC address that should not be learned, thereby affecting an original forwarding procedure within the VLAN 1.

In a second prior art, a reserved VLAN is configured to be used for TRILL OAM. However, because manufacturers, forms, and the like of devices on a TRILL are not uniform, reservation of a uniform VLAN usually cannot be ensured. If a reserved VLAN configured on an RB is not created on another RB, a TRILL OAM packet is still discarded and a TRILL OAM function cannot be really implemented. Additionally, a VLAN resource is in shortage currently and configuration of a reserved VLAN used for OAM further occupies an extra VLAN resource.

### SUMMARY

In view of this, embodiments of the present invention provide a method, a routing bridge RB, and a TRILL network for implementing a TRILL OAM packet, so that at the same time when availability of a TRILL OAM function is ensured, no extra VLAN resource is occupied, and an RB does not learn a MAC address that should not be learned and therefore a TRILL forwarding procedure is not affected.

According to a first aspect, an embodiment of the present invention provides a method for implementing OAM on a TRILL, including:
generating, by an ingress routing bridge RB, a first TRILL OAM packet through encapsulation, where an inner VLAN identifier and an outer VLAN identifier of the first TRILL OAM packet are a DVLAN identifier of a TRILL on which the ingress RB resides, an inner destination MAC address of the first TRILL OAM packet is a MAC address of an egress RB, an ingress routing bridge nickname in the TRILL header of the first TRILL OAM packet is a nickname of the ingress RB, and an egress routing bridge nickname in the TRILL header of the first TRILL OAM packet is a nickname of the egress RB; and
sending the first TRILL OAM packet to the egress RB, so that the egress RB processes the first TRILL OAM packet.

In a first possible implementation manner of the first aspect, the method further includes:
receiving, by the ingress RB, a second TRILL OAM packet, where an outer VLAN identifier of the second TRILL OAM packet is the DVLAN identifier, and an egress routing bridge nickname in the TRILL header of the second TRILL OAM is the nickname of the ingress RB;
performing, by the ingress RB, TRILL decapsulation on the second TRILL OAM packet to obtain a second OAM packet, where a destination MAC address of the second OAM packet is a MAC address of the ingress RB, and a VLAN identifier is the DVLAN identifier; and
processing, by the ingress RB, the second OAM packet.

In combination with the first aspect or the first possible implementation manner of the first aspect, in a second possible implementation manner of the first aspect, the generating, by a first RB, a TRILL OAM packet through encapsulation includes:
finding, by the ingress RB, a next-hop RB according to the nickname of the egress RB; and
using a MAC address of the next-hop RB as an outer destination MAC address and using the MAC address of the ingress RB as an outer source MAC address.

In combination with the first aspect or the first or second possible implementation manner of the first aspect, before the generating, by an ingress RB, a first TRILL OAM packet through encapsulation, the method further includes:
enabling, by the ingress RB, a feature for designating an inner VLAN for OAM, where the feature for designating an inner VLAN for OAM is specifically designating the DVLAN identifier of the TRILL as an inner VLAN identifier of a TRILL OAM packet.

In combination with the first aspect or any one of the foregoing possible implementation manners of the first aspect, in a fourth possible implementation manner of the first aspect, the DVLAN is configured on the ingress RB and the egress RB.

According to a second aspect, an embodiment of the present invention provides a routing bridge RB on a TRILL, including:
an encapsulating module, configured to generate a first TRILL OAM packet through encapsulation, where an inner VLAN identifier and an outer VLAN identifier of the first TRILL OAM packet are a DVLAN identifier of a TRILL on which the RB resides, an inner destination MAC address of the first TRILL OAM packet is a MAC address of an egress RB, and an egress routing bridge nickname in the TRILL header of the first TRILL OAM packet is a nickname of the egress RB; and
a sending module, send the first TRILL OAM packet to the egress RB, so that the egress RB processes the first TRILL OAM packet.

In a first possible implementation manner of the second aspect, the RB further includes:
a receiving module, configured to receive a second TRILL OAM packet, where an outer VLAN identifier of the second TRILL OAM packet is the DVLAN identifier, and an egress routing bridge nickname in the TRILL header of the second TRILL OAM packet is a nickname of the RB;
a decapsulating module, configured to perform TRILL decapsulation on the second TRILL OAM packet to obtain a second OAM packet, where a destination MAC address of the second OAM packet is a MAC address of the RB, and a VLAN identifier is the DVLAN identifier; and
an OAM processing module, configured to process the second OAM packet.

In combination with the second aspect or the first possible implementation manner of the second aspect, in a second possible implementation manner of the second aspect, the encapsulating module is specifically configured to find a next-hop RB according to the nickname of the egress RB, use a MAC address of the next-hop RB as an outer destination MAC address, and use the MAC address of the RB as an outer source MAC address.

In combination with the second aspect or a first or second possible implementation manner of the second aspect, in a third possible implementation manner of the second aspect, the RB further includes: a feature processing module, configured to enable or disable a feature for designating an inner VLAN for OAM, where the feature for designating an inner VLAN for OAM is specifically designating the DVLAN identifier of the TRILL as the inner VLAN identifier of the TRILL OAM packet.

In combination with the second aspect or any one of the foregoing possible implementation manners of the second aspect, in a fourth possible implementation manner of the second aspect, the DVLAN is configured on the RB.

According to a third aspect, an embodiment of the present invention provides a TRILL network, including an ingress RB and an egress RB, where:
the ingress RB generates a TRILL operation, administration and maintenance OAM packet through encapsulation and sends the TRILL OAM packet to the egress RB, where an inner virtual local area network identifier VLAN ID and an outer VLAN ID of the TRILL OAM packet are a designated virtual local area network identifier DVLAN ID of the TRILL, an inner destination media access control MAC address of the TRILL OAM packet is a MAC address of the egress RB, an ingress routing bridge nickname in the TRILL header of the TRILL OAM packet is a nickname of the ingress RB, and an egress routing bridge nickname in the TRILL header of the TRILL OAM packet is a nickname of the egress RB; and
the egress RB receives the TRILL OAM packet, performs TRILL decapsulation on the TRILL OAM packet to obtain an OAM packet, and processes the OAM packet.

In a first possible implementation manner of the third aspect, the ingress RB is specifically the RB described in the second aspect or any one of possible implementation manners of the second aspect.

By using the technical solutions provided in the embodiments of the present invention, when generating a TRILL OAM packet through encapsulation, an RB uses a DVLAN ID as an inner VLAN ID of the TRILL OAM packet. Because each RB on a TRILL generally configures and creates a DVLAN, it may be avoided that because an inner VLAN is not a VLAN concerned by the RB, the packet is discarded. Furthermore, the DVLAN is a valid VLAN, and therefore the packet is not discarded due to a related validity check, thereby ensuring availability of a TRILL OAM function. Meanwhile, a DVLAN identifier is designated as the inner VLAN identifier of the TRILL OAM packet, and no extra VLAN resource is occupied. In addition, because the DVLAN does not learn a MAC address by default, the RB can be prevented from learning a MAC address that should not be learned, and a TRILL forwarding procedure is not affected.

### BRIEF DESCRIPTION OF DRAWINGS

FIG. 1 is a schematic diagram of an encapsulation format of a TRILL packet in the prior art;
FIG. 2 is a flowchart of a method for implementing OAM on a TRILL according to an embodiment of the present invention;
FIG. 3 is another flowchart of a method for implementing OAM on a TRILL according to an embodiment of the present invention;
FIG. 4 and FIG. 5 are structural block diagrams of a routing bridges RB on a TRILL according to an embodiment of the present invention;
FIG. 6 is a schematic diagram of a hardware structure of a routing bridge RB on a TRILL according to an embodiment of the present invention; and
FIG. 7 is a schematic diagram of a TRILL network according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Generally, a VLAN ID in an inner Ethernet header is called inner VLAN ID, and a VLAN identified by the inner VLAN ID is called inner VLAN; and a VLAN ID in an outer Ethernet header is called outer VLAN ID, and a VLAN identified by the outer VLAN ID is called outer VLAN. A source MAC address and a destination MAC address in the outer Ethernet header are called outer source MAC address and outer destination MAC address, respectively; and a source MAC address and a destination MAC address in the inner Ethernet header are called inner source MAC address and inner destination MAC address, respectively.

Generally, a DVLAN is configured on a TRILL for interconnection and interworking between RBs, and the DVLAN is configured not to learn a MAC address by default. Each RB on the TRILL configures and creates a DVLAN and stores a DVLAN ID in a VLAN list, where the DVLAN ID is used for protocol interaction, packet forwarding, and the like. On the TRILL, the DVLAN, as a valid VLAN, can also meet a related validity check; and an outer VLAN ID of a TRILL packet generally uses the DVLAN ID by default. For example, on a TRILL deployed by a carrier 1, a VLAN whose ID is 1000 is designated as a DVLAN. On the TRILL deployed by the carrier 1, a DVLAN ID 1000 is stored in a VLAN list of each RB, and in a TRILL packet forwarding process, it is checked whether an outer VLAN ID of a TRILL packet is 1000. On a TRILL deployed by a carrier 2, a VLAN whose ID is 2048 is designated as a DVLAN. On the TRILL deployed by the carrier 2, a DVLAN ID 204 is generally stored in a VLAN list of each RB, and in a TRILL packet forwarding process, it is checked whether an outer VLAN ID of a TRILL packet is 2048.

FIG. 2 is a flowchart of a method for implementing OAM on a TRILL according to an embodiment of the present invention. The method includes:
201. An ingress routing bridge RB generates a TRILL OAM packet through encapsulation, where an inner VLAN ID and an outer VLAN ID of the TRILL OAM packet are a designated virtual local area network (Designated VLAN, DVLAN for short) ID of a TRILL on which the ingress RB resides.

An inner destination MAC address of the TRILL OAM packet is a MAC address of an egress RB, an ingress routing bridge nickname in the TRILL header of the TRILL OAM packet is a nickname of the ingress RB, and an egress routing bridge nickname in the TRILL header of the TRILL OAM packet is a nickname of the egress RB.

202. Send the TRILL OAM packet to the egress RB, so that the egress RB processes the TRILL OAM packet.

After the egress RB receives the TRILL OAM packet, if the egress RB finds that the egress routing bridge nickname in the TRILL header of the TRILL OAM packet is its own nickname, that is, the nickname of the egress RB, the egress RB performs TRILL decapsulation on the TRILL OAM packet to obtain an OAM packet. The egress RB first checks a VLAN identifier of the OAM packet. Because the VLAN identifier of the OAM packet is the DVLAN identifier and a destination MAC address of the OAM packet is a MAC address of the egress RB, the egress RB processes the OAM packet.

In this embodiment of the present invention, a DVLAN is designated to be used for TRILL OAM, and a DVLAN ID is used as an inner VLAN ID of a TRILL OAM packet. Because a DVLAN is generally configured on a TRILL, and the DVLAN is created on each RB, it may be avoided that because an inner VLAN is not a VLAN concerned by the RB, the packet is discarded. Furthermore, the DVLAN is a valid VLAN, and therefore the packet is not discarded due to a related validity check, thereby ensuring availability of a TRILL OAM function. Meanwhile, the DVLAN is designated to be used for the TRILL OAM and no extra VLAN resource is occupied. In addition, because the DVLAN does not learn a MAC address by default, the RB can be prevented from learning a MAC address that should not be learned, and a TRILL forwarding procedure is not affected.

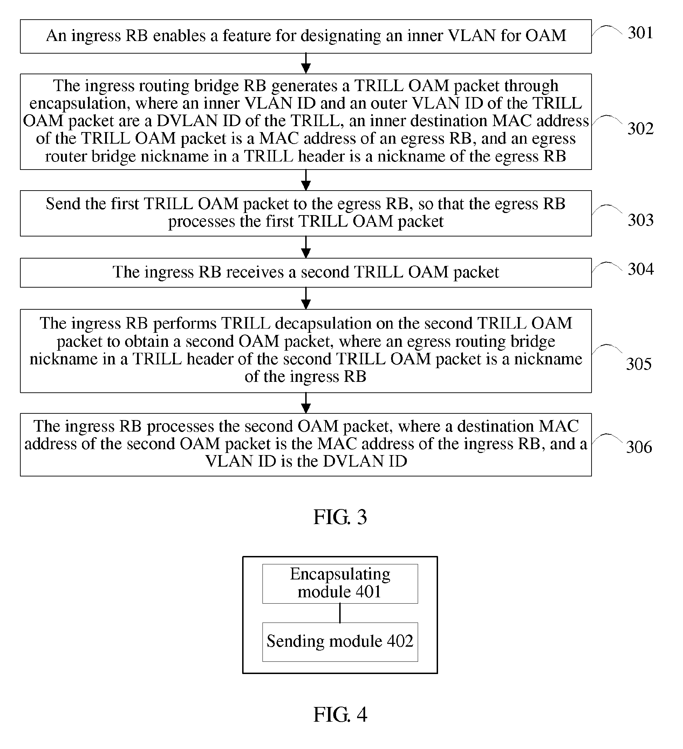

FIG. 3 is another flowchart of a method for implementing OAM on a TRILL according to an embodiment of the present invention. The method includes:
301. An ingress RB enables a feature for designating an inner VLAN for OAM.

The feature for designating an inner VLAN for OAM is specifically designating a DVLAN of a TRILL to be used for TRILL OAM, that is, using a DVLAN identifier of a TRILL as an inner VLAN identifier of a TRILL OAM packet so as to implement a TRILL OAM function.

In the present invention, a DVLAN is configured on a TRILL on which the ingress RB resides, and the DVLAN ID is stored in a VLAN list of the ingress RB. The ingress RB enables the feature for designating an inner VLAN for OAM.

Optionally, the feature for designating an inner VLAN for OAM is configured on each RB on the TRILL on which the ingress RB resides. Further optionally, each RB enables the feature for designating an inner VLAN for OAM.

302. The ingress RB generates a first TRILL OAM packet through encapsulation, where an inner VLAN ID and an outer VLAN ID of the first TRILL OAM packet are the DVLAN ID.

An inner destination MAC address of the first TRILL OAM packet is a MAC address of an egress RB, an ingress routing bridge nickname in the TRILL header of the first TRILL OAM packet is a nickname of the ingress RB, and an egress routing bridge nickname in the TRILL header of the first TRILL OAM packet is a nickname of the egress RB.

Optionally, in a process in which the ingress RB generates the first TRILL OAM packet through encapsulation, the ingress RB finds a next-hop RB according to the nickname of the egress RB, uses a MAC address of the next-hop RB as an outer destination MAC address, and uses a MAC address of the ingress RB as an outer source MAC address.

For example, on a TRILL deployed by a carrier 1, a VLAN whose ID is 1000 is configured and used as a DVLAN. When connectivity between an RB1 and an RB2 needs to be tested, the RB1 may perform TRILL encapsulation on a Ping packet to generate a TRILL Ping packet and send the TRILL Ping packet to the RB2. An inner VLAN ID and an outer VLAN ID of the TRILL Ping packet are both the DVLAN ID, that is, 1000; an inner source MAC address of the TRILL Ping packet is a MAC address of the RB1, and an inner destination MAC address is a source MAC address of the RB2; an ingress routing bridge nickname in the TRILL header of the TRILL Ping packet is a nickname of the RB1, and an egress routing bridge nickname in the TRILL header of the TRILL Ping packet is a nickname of the RB2; and an outer source MAC address of the TRILL Ping packet is a source MAC address of the RB1, and an outer destination MAC address of the TRILL Ping packet is a MAC address of a next-hop RB from the RB1 to the RB2.

303. Send the first TRILL OAM packet to the egress RB, so that the egress RB processes the first TRILL OAM packet.

After the egress RB receives the first TRILL OAM packet, if the egress RB finds that the egress routing bridge nickname in the TRILL header of the first TRILL OAM packet is its own nickname, that is, the nickname of the egress RB, the egress RB performs TRILL decapsulation on the first TRILL OAM packet to obtain a first OAM packet. The egress RB first checks a VLAN ID of the first OAM packet. Because the VLAN ID of the first OAM packet is the DVLAN ID and a destination MAC address of the first OAM packet is the MAC address of the egress RB, the egress RB processes the first OAM packet.

304. The ingress RB receives a second TRILL OAM packet.

Specifically, the ingress RB receives the second TRILL OAM packet, an outer VLAN ID of the second TRILL OAM packet is the DVLAN ID, and the ingress RB acquires an egress routing bridge nickname in the TRILL header of the second TRILL OAM packet.

If the egress routing bridge nickname is not the nickname of the ingress RB, the ingress RB finds a next-hop RB according to the egress routing bridge nickname, uses a MAC address of the next-hop RB as an outer destination MAC address, uses the MAC address of the ingress RB as an outer source MAC address, and forwards the second TRILL OAM packet. This procedure ends.

If the egress routing bridge nickname is the nickname of the ingress RB, continue to perform 305.

305. The ingress RB performs TRILL decapsulation on the second TRILL OAM packet to obtain a second OAM packet, where the egress routing bridge nickname in the TRILL header of the second TRILL OAM packet is the nickname of the ingress RB.

Specifically, after the ingress RB receives the second TRILL OAM packet, if the ingress RB finds that the egress routing bridge nickname in the TRILL header of the second TRILL OAM packet is its own nickname, that is, the nickname of the ingress RB, the ingress RB performs the TRILL decapsulation on the second TRILL OAM packet to obtain the second OAM packet.

306. The ingress RB processes the second OAM packet, where a destination MAC address of the second OAM packet is the MAC address of the ingress RB, and a VLAN ID is the DVLAN ID.

Specifically, after the ingress RB performs the TRILL decapsulation on the second TRILL OAM packet to obtain the second OAM packet, the ingress RB checks the VLAN ID of the second OAM packet.

If the VLAN ID of the second OAM packet is the DVLAN ID and the destination MAC address of the second OAM packet is the MAC address of the ingress RB, the ingress RB processes the second OAM packet. For a process, reference may be made to general OAM processing, and no further details are provided herein.

If the VLAN ID of the second OAM packet is not in the VLAN list of the ingress RB, the second OAM packet is discarded.

In this embodiment of the present invention, a DVLAN ID is used as an inner VLAN ID of a TRILL OAM packet. Because each RB on a TRILL generally configures and creates a DVLAN, it may be avoided that because an inner VLAN is not a VLAN concerned by the RB, the packet is discarded. Furthermore, the DVLAN is a valid VLAN, and therefore the packet is not discarded due to a related validity check, thereby ensuring availability of a TRILL OAM function. In addition, the DVLAN ID is designated as the inner VLAN ID of the TRILL OAM packet, and no extra VLAN resource is occupied. Furthermore, because the DVLAN does not learn a MAC address by default, the RB can be prevented from learning a MAC address that should not be learned, and a TRILL forwarding procedure is not affected.

FIG. 4 is a structural block diagram of a routing bridge RB on a TRILL according to an embodiment of the present invention. The RB that is used to implement the methods shown in FIG. 2 and FIG. 3 includes:
an encapsulating module 401, configured to generate a first TRILL OAM packet through encapsulation, where an inner VLAN ID and an outer VLAN ID of the first TRILL OAM packet are a DVLAN ID of the TRILL, an inner destination MAC address of the first TRILL OAM packet is a MAC address of an egress RB, and an egress routing bridge nickname in the TRILL header of the first TRILL OAM packet is a nickname of the egress RB; and
a sending module 402, configured to send the first TRILL OAM packet to the egress RB, so that the egress RB processes the first TRILL OAM packet.

The DVLAN is configured on the RB.

The encapsulating module 401 is specifically configured to find a next-hop RB according to the nickname of the egress RB, use a MAC address of the next-hop RB as an outer destination MAC address, and use a MAC address of the RB as an outer source MAC address.

Optionally, a feature for designating an inner VLAN for OAM is configured on the RB. The feature for designating an inner VLAN for OAM is specifically designating the DVLAN of the TRILL to be used for TRILL OAM, that is, using the DVLAN ID of the TRILL as the inner VLAN ID of the TRILL OAM packet so as to implement a TRILL OAM function.

Optionally, the RB further includes:
a feature processing module, configured to enable or disable the feature for designating an inner VLAN for OAM.

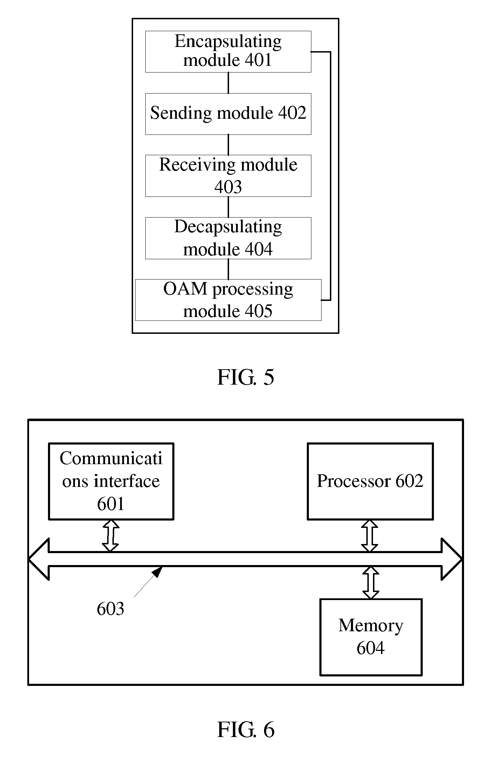

Further, as shown in FIG. 5, the RB may further include:
a receiving module 403, configured to receive a second TRILL OAM packet, where an outer VLAN ID of the second TRILL OAM packet is the DVLAN ID, and an egress routing bridge nickname in the TRILL header of the second TRILL OAM packet is a nickname of the RB;
a decapsulating module 404, configured to perform TRILL decapsulation on the second TRILL OAM packet to obtain a second OAM packet; and
an OAM processing module 405, configured to process the second OAM packet, where a destination MAC address of the second OAM packet is the MAC address of the RB, and a VLAN ID is the DVLAN ID.

Further optionally, the OAM processing module 405 may further be configured to generate a second response packet in response to the second TRILL OAM. The encapsulating module 401 may further be configured to perform TRILL encapsulation on the second response packet. The sending module 402 may further be configured to send the second response packet on which the TRILL encapsulation has been performed.

Optionally, the receiving module 403 may further be configured to receive a first response packet of the egress RB in response to the first TRILL OAM packet. The decapsulating module 404 may further be configured to perform TRILL decapsulation on the first response packet. The OAM processing module 405 may further be configured to process the first response packet on which the TRILL decapsulation has been performed.

In this embodiment of the present invention, the RB uses a DVLAN ID as an inner VLAN ID of a TRILL OAM packet. Because each RB on a TRILL generally configures and creates a DVLAN, it may be avoided that because an inner VLAN is not a VLAN concerned by the RB, the packet is discarded. Furthermore, the DVLAN is a valid VLAN, and therefore the packet is not discarded due to a validity check, thereby ensuring availability of a TRILL OAM function. In addition, the DVLAN ID is designated as the inner VLAN ID of the TRILL OAM packet, and no extra VLAN resource is occupied. Furthermore, because the DVLAN does not learn a MAC address by default, the RB can be prevented from learning a MAC address that should not be learned, and a TRILL forwarding procedure is not affected.

FIG. 6 is a schematic diagram of a hardware structure of a routing bridge RB on a TRILL according to an embodiment of the present invention. The RB includes a processor 601, a memory 602, a communications interface 603, and a bus 604. The processor 601, the memory 602, and the communications interface 603 connect to each other by using the bus 604. The bus 604 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of expression, only one bold line is used in FIG. 6 for expression but this does not mean that there is only one bus or one type of bus.

The memory 602 is configured to store a program. Specifically, the program may include a program code, where the program code includes a computer operation instruction. The memory 602 may include a high-speed RAM memory and may also include a non-volatile memory (non-volatile memory, nvm for short), such as an electrically erasable programmable read-only memory (electrically erasable and programmable read only memory, EEPROM for short) and a flash memory (Flash).

The processor 601 executes the program stored in the memory 602; is configured to generate a first TRILL OAM packet through encapsulation, where an inner VLAN ID and an outer VLAN ID of the first TRILL OAM packet are a DVLAN ID of the TRILL, an inner destination MAC address of the first TRILL OAM packet is a MAC address of an egress RB, an ingress routing bridge nickname in the TRILL header of the first TRILL OAM packet is a nickname of the RB, and an egress routing bridge nickname in the TRILL header of the first TRILL OAM packet is a nickname of the egress RB; and is further configured to send the first TRILL OAM packet to the egress RB, so that the egress RB processes the first TRILL OAM packet.

The DVLAN is configured on the RB.

The processor 601 is specifically configured to find a next-hop RB according to the nickname of the egress RB, use a MAC address of the next-hop RB as an outer destination MAC address, and use a MAC address of the RB as an outer source MAC address, so as to generate the first TRILL OAM packet through encapsulation.

Optionally, a feature for designating an inner VLAN for OAM is further configured on the RB. The feature for designating an inner VLAN for OAM is specifically designating the DVLAN of the TRILL to be used for TRILL OAM, that is, using the DVLAN ID of the TRILL as the inner VLAN ID of the TRILL OAM packet so as to implement a TRILL OAM function. The processor 601 is further configured to enable or disable the feature for designating an inner VLAN for OAM.

Further, the processor 601 is further configured to: receive a second TRILL OAM packet, where an outer VLAN ID of the second TRILL OAM packet is the DVLAN ID, an egress routing bridge nickname in the TRILL header of the second TRILL OAM packet is the nickname of the RB; perform TRILL decapsulation on the second TRILL OAM packet to obtain a second OAM packet; and process the second OAM packet, where a destination MAC address of the second OAM packet is the MAC address of the RB, and a VLAN identifier is the DVLAN ID.

The processor 601 is specifically configured to: receive the second TRILL OAM packet and acquire the egress routing bridge nickname in the TRILL header of the second TRILL OAM packet; if the egress routing bridge nickname is not the nickname of the ingress RB, find a next-hop RB according to the egress routing bridge nickname, use a MAC address of the next-hop RB as an outer destination MAC address, use the MAC address of the RB as an outer source MAC address, and forward the second TRILL OAM packet; and if the egress routing bridge nickname is the nickname of the RB, perform TRILL decapsulation on the second TRILL OAM packet to obtain a second OAM packet, where the ingress RB checks a VLAN ID of the second OAM packet, if the VLAN ID of the second OAM packet is the DVLAN ID and a destination MAC address of the second OAM packet is the MAC address of the ingress RB, the ingress RB processes the second OAM packet, and if the VLAN ID of the second OAM packet is not in a VLAN list of the ingress RB, discards the second OAM packet.

In this embodiment of the present invention, the RB uses a DVLAN ID as an inner VLAN ID of a TRILL OAM packet by using the processor, so as to generate the TRILL OAM packet through encapsulation. Because each RB on a TRILL generally configures and creates a DVLAN, it may be avoided that because an inner VLAN is not a VLAN concerned by the RB, the packet is discarded. Furthermore, the DVLAN is a valid VLAN, and therefore the packet is not discarded due to a validity check, thereby ensuring availability of a TRILL OAM function. In addition, the DVLAN ID is designated as the inner VLAN ID of the TRILL OAM packet, and no extra VLAN resource is occupied. Furthermore, because the DVLAN does not learn a MAC address by default, the RB can be prevented from learning a MAC address that should not be learned, and a TRILL forwarding procedure is not affected.

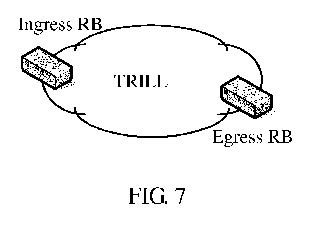

FIG. 7 is a schematic diagram of a TRILL network according to an embodiment of the present invention. The TRILL includes an ingress routing bridge RB and an egress RB.

The ingress RB generates a TRILL OAM packet through encapsulation and sends the TRILL OAM packet to the egress RB, where an inner VLAN ID and an outer VLAN ID of the TRILL OAM packet are a DVLAN ID of the TRILL, an inner destination MAC address of the TRILL OAM packet is a MAC address of the egress RB, an ingress routing bridge nickname in the TRILL header of the TRILL OAM packet is a nickname of the ingress RB, and an egress routing bridge nickname in the TRILL header of the TRILL OAM packet is a nickname of the egress RB.

The egress RB receives the TRILL OAM packet, performs TRILL decapsulation on the TRILL OAM packet to obtain an OAM packet, and processes the OAM packet.

The DVLAN is configured on the TRILL network, and the DVLAN is configured and created on the ingress RB and the egress RB.

Specifically, after receiving the TRILL OAM packet, the egress RB acquires the egress routing bridge nickname of the TRILL OAM packet, and because the egress routing bridge nickname is the nickname of the egress RB, performs TRILL decapsulation on the TRILL OAM packet to obtain an OAM packet routing bridge. Because a VLAN ID of the OAM packet is the DVLAN ID and a destination MAC address is the MAC address of the egress RB, the egress RB processes the OAM packet. For a process, reference may be made to general OAM processing, and no further details are provided herein.

Further, the ingress RB specifically includes:
an encapsulating module, configured to generate the TRILL OAM packet through encapsulation; and
a sending module, configured to send the TRILL OAM packet to the egress RB.

Optionally, a feature for designating an inner VLAN for OAM is configured on the ingress RB. The feature for designating an inner VLAN for OAM is specifically designating the DVLAN of the TRILL to be used for TRILL OAM, that is, using the DVLAN ID as the inner VLAN ID of the TRILL OAM packet. The ingress RB enables the feature for designating an inner VLAN for OAM and uses the DVLAN ID of the TRILL as the inner VLAN ID when generating the TRILL OAM packet through encapsulation.

Optionally, the ingress RB further includes a feature processing module, configured to enable or disable the feature for designating an inner VLAN for OAM.

Further, the egress RB specifically includes:
a receiving module, configured to receive the TRILL OAM packet;
a decapsulating module, configured to perform the TRILL decapsulation on the TRILL OAM packet to obtain the OAM packet; and
an OAM processing module, configured to process the OAM packet.

In this embodiment of the present invention, the TRILL network uses a DVLAN for TRILL OAM. Because each RB on a TRILL generally configures and creates a DVLAN, it may be avoided that because an inner VLAN is not a VLAN concerned by an RB, a packet is discarded. Furthermore, the DVLAN is a valid VLAN, and therefore the packet is not discarded due to a validity check, thereby ensuring availability of a TRILL OAM function. In addition, a DVLAN ID is designated as an inner VLAN ID of a TRILL OAM packet, and no extra VLAN resource is occupied. Furthermore, because the DVLAN does not learn a MAC address by default, the RB can be prevented from learning a MAC address that should not be learned, and a TRILL forwarding procedure is not affected.

The foregoing descriptions are merely exemplary embodiments of the present invention, but are not intended to limit the protection scope of the present invention. Any variation or replacement readily figured out by a person skilled in the art within the technical scope disclosed in the present invention shall all fall within the protection scope of the present invention.

## Claims

1. A method for implementing operation, administration and maintenance OAM on a Transparent Interconnection of Lots of Links TRILL, comprising:
generating, by an ingress routing bridge RB, a first TRILL OAM packet through encapsulation, wherein an inner virtual local area network identifier VLAN ID and an outer VLAN ID of the first TRILL OAM packet are a designated virtual local area network identifier DVLAN ID of a TRILL on which the ingress RB resides, an inner destination media access control MAC address of the first TRILL OAM packet is a MAC address of an egress RB, an ingress routing bridge nickname in the TRILL header of the first TRILL OAM packet is a nickname of the ingress RB, and an egress routing bridge nickname in the TRILL header of the first TRILL OAM packet is a nickname of the egress RB; and
sending the first TRILL OAM packet to the egress RB, so that the egress RB processes the first TRILL OAM packet.

2. The method according to claim 1, further comprising:
receiving, by the ingress RB, a second TRILL OAM packet, wherein an outer VLAN ID of the second TRILL OAM packet is the DVLAN ID, and an egress routing bridge nickname in the TRILL header of the second TRILL OAM packet is the nickname of the ingress RB;
performing, by the ingress RB, TRILL decapsulation on the second TRILL OAM packet to obtain a second OAM packet, wherein a destination MAC address of the second OAM packet is a MAC address of the ingress RB, and a VLAN identifier is the DVLAN identifier; and
processing, by the ingress RB, the second OAM packet.

3. The method according to claim 1 or 2, wherein the generating, by a first RB, a first TRILL OAM packet through encapsulation comprises:
finding, by the ingress RB, a next-hop RB according to the nickname of the egress RB; and
using a MAC address of the next-hop RB as an outer destination MAC address and using the MAC address of the ingress RB as an outer source MAC address.

4. The method according to any one of claims 1 to 3, before the generating, by an ingress RB, a first TRILL OAM packet through encapsulation, further comprising:
enabling, by the ingress RB, a feature for designating an inner VLAN for OAM, wherein the feature for designating an inner VLAN for OAM is specifically designating the DVLAN of the TRILL to be used for TRILL OAM.

5. The method according to any one of claims 1 to 4, wherein the DVLAN is configured on the ingress RB and the egress RB.

6. A routing bridge RB in a Transparent Interconnection of Lots of Links TRILL, comprising:
an encapsulating module, configured to generate a first TRILL operation, administration and maintenance OAM packet through encapsulation, wherein an inner local area network identifier VLAN ID and an outer VLAN ID of the first TRILL OAM packet are a designated virtual local area network identifier DVLAN ID of a TRILL on which the RB resides, an inner destination media access control MAC address of the first TRILL OAM packet is a MAC address of an egress RB, and an egress routing bridge nickname in the TRILL header of the first TRILL OAM packet is a nickname of the egress RB; and
a sending module, configured to send the first TRILL OAM packet to the egress RB, so that the egress RB processes the first TRILL OAM packet.

7. The RB according to claim 6, further comprising:
a receiving module, configured to receive a second TRILL OAM packet, wherein an outer VLAN ID of the second TRILL OAM packet is the DVLAN ID, and an egress routing bridge nickname in the TRILL header of the second TRILL OAM packet is a nickname of the RB;
a decapsulating module, configured to perform TRILL decapsulation on the second TRILL OAM packet to obtain a second OAM packet, wherein a destination MAC address of the second OAM packet is a MAC address of the RB, and a VLAN ID is the DVLAN ID; and
an OAM processing module, configured to process the second OAM packet.

8. The RB according to claim 6 or 7, wherein the encapsulating module is specifically configured to find a next-hop RB according to the nickname of the egress RB, use a MAC address of the next-hop RB as an outer destination MAC address, and use the MAC address of the RB as an outer source MAC address.

9. The RB according to any one of claims 6 to 8, wherein the RB further comprises:
a feature processing module, configured to enable or disable a feature for designating an inner VLAN for OAM, wherein the feature for designating an inner VLAN for OAM is specifically designating the DVLAN of the TRILL to be used for TRILL OAM.

10. The RB according to any one of claims 6 to 9, wherein the DVLAN is configured on the RB.

11. A Transparent Interconnection of Lots of Links TRILL network, comprising an ingress routing bridge RB and an egress RB, wherein:
the ingress RB generates a TRILL operation, administration and maintenance OAM packet through encapsulation and sends the TRILL OAM packet to the egress RB, wherein an inner virtual local area network identifier VLAN ID and an outer VLAN ID of the TRILL OAM packet are a designated virtual local area network identifier DVLAN ID of the TRILL, an inner destination media access control MAC address of the TRILL OAM packet is a MAC address of the egress RB, an ingress routing bridge nickname in the TRILL header of the TRILL OAM packet is a nickname of the ingress RB, and an egress routing bridge nickname in the TRILL header of the TRILL OAM packet is a nickname of the egress RB; and
the egress RB receives the TRILL OAM packet, performs TRILL decapsulation on the TRILL OAM packet to obtain an OAM packet, and processes the OAM packet.
